(19)

**Europäisches Patentamt**

**European Patent Office**

**Office européen des brevets**

(11) **EP 4 648 427 A1**

(12) **EUROPEAN PATENT APPLICATION**

(43) Date of publication:
**12.11.2025 Bulletin 2025/46**

(21) Application number: **24305728.8**

(22) Date of filing: **10.05.2024**

(51) International Patent Classification (IPC):
***H04N 21/81*** (2011.01)

(52) Cooperative Patent Classification (CPC):
**G06T 15/20; H04N 21/8146; H04N 21/816**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
- **SABATER, Neus**
  **35830 BETTON (FR)**
- **SANDRI, Gustavo**
  **35510 CESSON-SEVIGNE (FR)**
- **CHUPEAU, Bertrand**
  **35700 RENNES (FR)**
- **THUDOR, Franck**
  **35000 RENNES (FR)**

(74) Representative: **Vossius & Partner Patentanwälte Rechtsanwälte mbB Siebertstraße 3 81675 München (DE)**

(54) **ADAPTIVE ATTRIBUTES FOR 3D GAUSSIANS**

(57)     Methods and apparatus are provided to implement adaptive attributes for three-dimensional Gaussians for image processing. The embodiments enable image rendering, encoding, decoding and other processes to be performed using the three-dimensional Gaussians. In at least one embodiment, the number of coefficients for each Gaussian or each group of Gaussians is adapted to a scene. In other embodiments, the number of parameters for each three-dimensional Gaussian or each group of three-dimensional Gaussians is stored and/or transmitted.

Figure 1

EP 4 648 427 A1

**Description**

TECHNICAL FIELD

At least one of the present embodiments generally relates to a method or an apparatus for video rendering.

BACKGROUND

The general aspects described herein relate to approaches for three-dimensional scene rendering.

SUMMARY

At least one of the present embodiments generally relates to a method or an apparatus for content-adapted attributes for three-dimensional Gaussian representation of rendered images.

According to a first aspect, there is provided a method. The method comprises steps for determining three-dimensional Gaussian representations of a scene comprising available views, wherein color components comprise spherical harmonics of a first degree corresponding to R,G,B color; rendering views using viewpoints of the scene using the determined three-dimensional Gaussian representations; determining an error value between the available views and the rendered views; retraining pixels having said error value higher than a threshold, using higher spherical harmonics; determining final rendered views by repeating said rendering, determining of the error value, and retraining until an end condition is met; and, performing subsequent processing on the final rendered views

According to another aspect, there is provided an apparatus. The apparatus comprises a processor and a memory. The processor can be configured to operate on image data according to any of the described methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

BRIEF DESCRIPTION OF THE DRAWINGS

Figure 1 illustrates two views of a scene captured from two different viewpoints.

Figure 2 illustrates one embodiment of a method under the described aspects.

Figure 3 illustrates one embodiment of an apparatus under the described aspects.

Figure 4 illustrates a standard, generic, video compression scheme.

Figure 5 illustrates a standard, generic, video decompression scheme.

Figure 6 illustrates a processor-based system for encoding/decoding under the general described aspects.

DETAILED DESCRIPTION

The embodiments described here are in the field of three-dimensional (3D) scene rendering.

Neural Radiance Fields (NeRFs) have proved to be a remarkable method to render new views of a complex scene from a limited number of captured views. During the last three years, a lot of progress has been made to improve the first initial work but computational complexity remains the main bottleneck of this method since NeRFs aim at evaluating the scene luminance for all the points of the 3D volume.

On the other hand, 3D Gaussians (3DGs) have emerged as a new scene representation that is able to render 3D radiance fields with the same quality as NeRFs but much faster. Indeed, 3DG splatting, which is the rendering of 3DGs, avoids unnecessary computation in the empty space to decrease training time and achieve real-time rendering.

Gaussian splatting has already been used in the past in the computer graphics community but recently, with the advent of artificial intelligence and the arrival of very powerful GPUs (General Processing Units), new learning techniques have become popular, creating a paradigm-shift in the realm of 3D scene representation.

The main drawback of 3DG splatting is that it requires a large amount of memory for the storage of the Gaussians. A technical paper reports a memory consumption significantly higher than NeRF-based solutions which may be a hurdle for the deployment of 3DG splatting in consumer devices or low-end GPUs. The solution proposed in another approach generates a large amount of 3DGs due to the densification process during optimization (cloning and splitting). This makes the transmission and manipulation of 3DGs more complicated than it should be.

In the literature one solution has been proposed to solve the problem of the large number of attributes. In distillation is used to learn a more compact representation of 3DGs. In particular, the distillation implies that a model, called the *teacher model,* is trained with all parameters for the 3DGs. Then, a *student model,* defined with less parameters learns from the teacher model. The goal is to transmit only the student model that is more compact but is trained to reproduce the teacher's quality.

This process implies that the two models need to be trained. And the memory footprint during the first training is very large. Also, the authors, reports limited success with this strategy alone and need to generate pseudo-views so the student actually learns a better quality from the teacher compared to a lower degree model alone. This new pseudo-view generation aggravates even more the memory problem.

Among the attributes of a 3DG, the color takes 80% of the total memory footprint. This is because each 3DG is characterized by the coefficients of spherical harmonics and many of them are required to render realistically natural scenes with specularities (48 coefficients in the original solution of).

However, we know that natural scenes contain specularities but also Lambertian surfaces with almost no changes in the color and lighting when changing the viewpoint. For these parts of the scenes there's no need to use as many coefficients. Indeed, a lower degree representation or a simple color value (RGB) may be enough to represent the corresponding surfaces with high quality. We propose to adapt the number of coefficients for each Gaussian or each group of Gaussians to adapt to the scene. This means that 3DGs representing non Lambertian surfaces will have a large number of coefficients and 3DGs representing Lambertian surfaces will have only a reduced number of coefficients with lower degree. Note that the number of parameters for each 3DG or group of 3DGs can be stored and transmitted. We also propose a method to adaptively compute the number of parameters for each 3DG or group of 3DGs when the input views, or a sub-set of the input views is available.

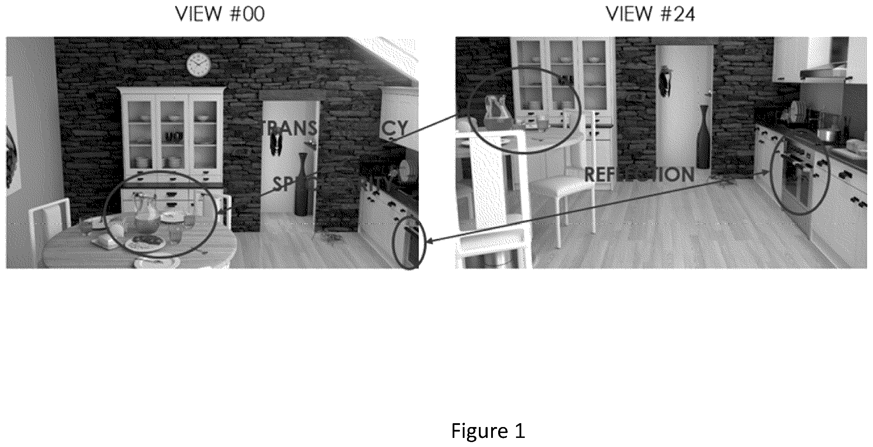

Natural scenes captured from different viewpoints contain parts that are completely Lambertian, so the color and lighting do not change when the viewpoint changes, and other parts that are more challenging. Among these challenging situations there are transparencies and specularities due to non-Lambertian surfaces. In other words, different object materials diffuse the light differently, so the number of descriptors to model these light changes should vary per region. Figure 1 is an illustration of such situation.

3DGs is a data volume representation that is able to take into account specularities. This is why the rendering views are highly accurate and realistic. However, the actual model considers a large number of coefficients for all the regions of the scene to tackle such specularities.

Formally, a 3DG is defined as an object in the 3D space.

$$G(X) = e^{-\frac{1}{2}(X-\mu)^T \Sigma^{-1}(X-\mu)}$$

characterized by its center $\mu = (x, y, z)$, a 3D covariance matrix $\Sigma$, where $\Sigma$ can be decomposed into a scaling matrix $S$ (with parameters $s_1$, $s_2$ and $s_3$) and a rotation matrix $R$ (encoded into a unit quaternion $q$ with coefficients $q_1$, $q_2$, $q_3$ and $q_4$) for differentiable optimization. Besides the geometric description of each 3DG, other attributes are considered such as the opacity $\alpha$ and the color $c$, which is usually a list of spherical harmonics $\{c_n | n = 1, ..., N\}$. Note that low degree harmonics encode smooth changes in color where higher degree harmonics encode specularities and non-Lambertian changes. In the current implementations $N = 48$ (16 per each color component) for all Gaussians in order to correctly recover the challenging areas.

Note that spherical harmonics are a good option to represent hemispherical functions and largely used in the literature but that other options are possible such as spherical wavelets or Zernike polynomials. In any case, the view dependent color of the scene is modelled as a list of coefficients in a hemispherical basis.

Now, we notice that it is not necessary to have as many coefficients to render some areas of the scene.

In a first embodiment we adaptively compute the number of coefficients for each 3DG or each group of 3DGs. More precisely, the list of coefficients does not have a fixed number of elements but a) it changes for each Gaussian position $\mu$: $\{c_n | n = 1, ... , N(\mu)\}$, or b) it changes for each region $I = 1, ... , L$: $\{c_n | n = 1, ... , N(I)\}$, where $L$ *is* the number of regions of the scene.

In a second embodiment all 3DGs have the same number of coefficients, but some of them are forced to 0 and not coded. More precisely, the coefficients will be a list $\{c_n | n = 1, ... , N\}$, and coefficients are ordered by their increasing corresponding frequency in their transform (spherical harmonics, spherical wavelets, or Zernike polynomials, for example). The coefficients $c_n$ where $n > K$ are forced to 0. As in the first embodiment, there are two cases: a) the value K changes for each Gaussian position $\mu$. Thus, K is a function of $\mu$ and b) the value K changes for each region $I = 1, ..., L$), where $L$ is the number of regions of the scene. Thus, K is a function of *l*.

In solution b), the number of regions can be determined by a previous segmentation or over-segmentation of the scene. Different possible situations are the following.

First, if the *material_id* information is available, the number of coefficients $N(l)$ can be determined from it. For example, a region mainly corresponding to matte wood will have a small number of coefficients, while a metal object will have a high number of them.

Second, if an over-segmentation, segmentation or grouping of 3DGs is available, all the 3DGs into the group of 3DGs will share the same coefficients.

**Method to determine the number of coefficients when the input (or a sub-set) views are available:**

First, generate the 3D Gaussians of a scene as described in with 3D Gaussians such that the color components contain only the spherical harmonics of degree 1, corresponding to the (R,G,B) color.

Second, from the 3DG representation obtained in the first step, consider the viewpoints of the views, or sub-set of views, and render new images with such viewpoints.

Third, compute the error per pixel between the available views with the rendered views (or a sub-set) with a quality measure. For instance, $L^1$, $L^2$ or a subjective measure.

Fourth, pixels with high error is Step 3 are considered as poorly recovered. The 3D Gaussians or group of Gaussians that have contributed to such pixels are trained again but having a list of spherical harmonics of degree 2. All the available parameters from the previous optimization are used as initialization of this optimization.

Fifth, repeat Steps 2,3,4 incrementing the degree of the spherical harmonics by one until the tolerated error is smaller to a given value or the degree of the spherical harmonics has attained $N_{max}$.

**Signalling**

When transmitting a compressed representation of the 3D scene with such adaptive color attributes on top of 3D Gaussians, the number of coefficients is signalled in the bitstream, either per individual 3D Gaussian or per group of Gaussians, identified by their group ID.

The signalling can be directly the number of coefficients (from 1 per color component for Lambertian surfaces to Nmax, e.g. 64 for highly specular surfaces). An alternative is to signal a material ID, referring to a database of material properties known by the decoder, comprising among other information the number of color coefficients to render the view dependent reflection properties of the surface material.

The described embodiments can also leverage a semantic segmentation of the 3D scene representation if available. Let us assume that "object/region IDs" with some semantic meanings are attached to groups of 3D Gaussians (e.g. different body parts of a human character, background, foreground objects, etc.) and that objects/regions of interest are identified among this set of groups of 3D Gaussians. For example, the face of human characters will be of high importance while the far background will not. Whatever the reflection properties of the object surfaces, 3D Gaussians attached object/region not tagged "of interest" can be represented with a single RGB color, whereas the other ones will benefit for the full set of coefficients or of an adaptive number of coefficients according to the embodiments previously described.

The described embodiments have one advantage that the rendered views with such adaptive volumetric representation are of high quality but the number of bits to render such scene is smaller.

The number of coefficients, or descriptors, per 3DGs can be normative in a future 3DG standard.

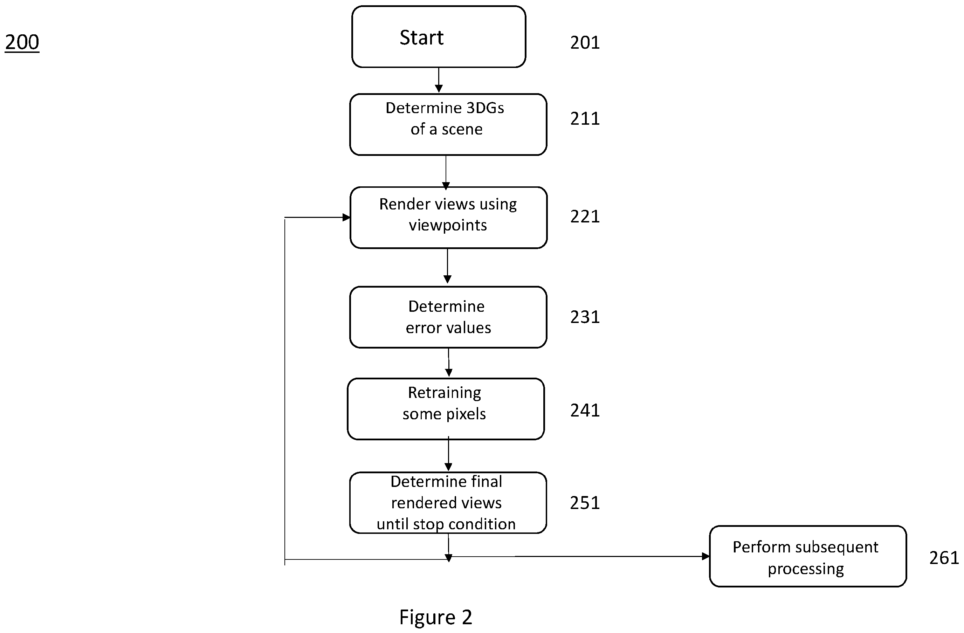

One embodiment of a method 200 under the general aspects described here is shown in Figure 2. The method commences at start block 201 and control proceeds to block 211 for determining three-dimensional Gaussian representations of a scene comprising available views, wherein color components comprise spherical harmonics of a first degree corresponding to R,G,B color. Control proceeds from block 211 to block 221 for rendering views using viewpoints of the scene using the determined three-dimensional Gaussian representations. Control proceeds from block 221 to block 231 for determining an error value between the available views and the rendered views. Control proceeds from block 231 to block 241 for retraining pixels having said error value higher than a threshold, using higher spherical harmonics. Control proceeds from block 241 to block 251 for determining final rendered views by repeating said rendering, determining of the error value, and retraining until an end condition is met. Control proceeds from block 251 to block 261 for performing subsequent processing on the final rendered views.

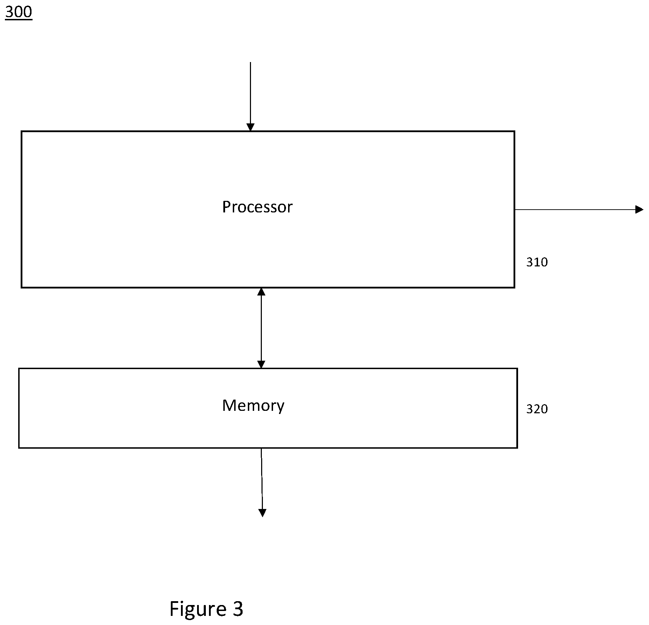

Figure 3 shows one embodiment of an apparatus 300 for rendering, encoding, decoding, compressing, or decompressing, or filtering of image data using the aforementioned methods. The apparatus comprises Processor 310 and can be interconnected to a memory 320 through at least one port. Both Processor 310 and memory 320 can also have one or more additional interconnections to external connections.

Processor 310 is also configured to either insert or receive information in a bitstream and, either rendering, compressing, encoding, or decoding using any of the described aspects.

The embodiments described here include a variety of aspects, including tools, features, embodiments, models, approaches, etc. Many of these aspects are described with specificity and, at least to show the individual characteristics, are often described in a manner that can sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

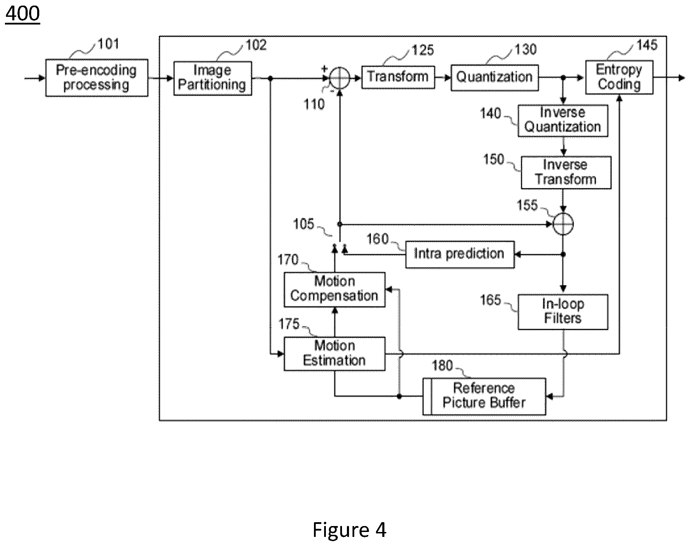

The aspects described and contemplated in this application can be implemented in many different forms. Figures 4, 5, and 6 provide some embodiments, but other embodiments are contemplated and the discussion of Figures 4, 5, and 6 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" can be used interchangeably, the terms "pixel" and "sample" can be used interchangeably, the terms "image," "picture" and "frame" can be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions can be modified or combined.

Various methods and other aspects described in this application can be used to modify modules, for example, the intra prediction, entropy coding, and/or decoding modules (160, 260, 145, 230), of a video encoder 100 and decoder 200 as shown in Figure 1 and Figure 2. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application. The specific values are for example purposes and the aspects described are not limited to these specific values.

Figure 4 illustrates an encoder 400. Variations of this encoder 400 are contemplated, but the encoder 400 is described below for purposes of clarity without describing all expected variations.

Before being encoded, the video sequence can go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 400, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

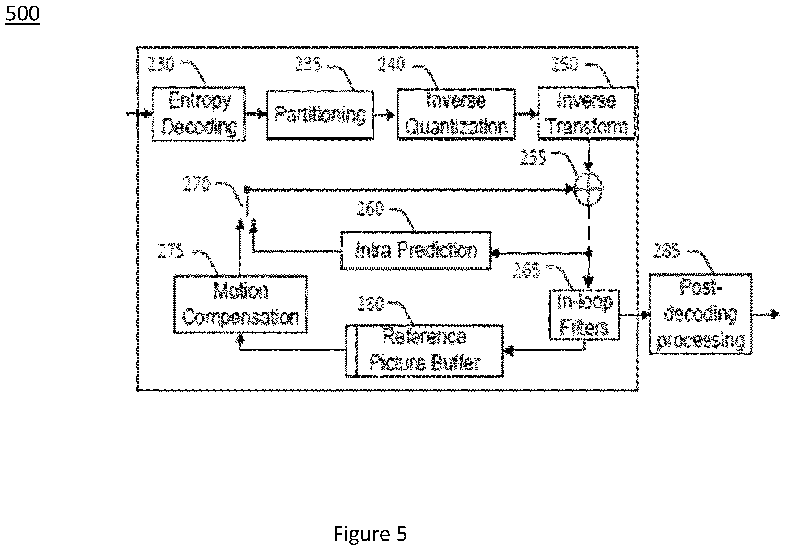

Figure 5 illustrates a block diagram of a video decoder 500. In the decoder 500, a bitstream is decoded by the decoder elements as described below. Video decoder 500 generally performs a decoding pass reciprocal to the encoding pass as described in Figure 4. The encoder 400 also generally performs video decoding as part of encoding video data.

In particular, the input of the decoder includes a video bitstream, which can be generated by video encoder 400. The bitstream is first entropy decoded (230) to obtain transform coefficients, motion vectors, and other coded information. The picture partition information indicates how the picture is partitioned. The decoder can therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

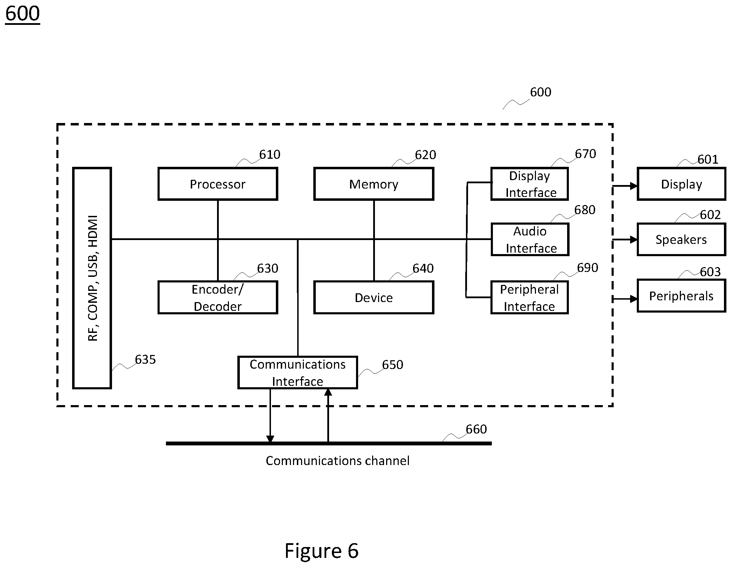

Figure 6 illustrates a block diagram of an example of a system in which various aspects and embodiments are implemented. System 600 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 600, singly or in combination, can be embodied in a single integrated circuit (IC), multiple ICs, and/or discrete components. For example, in at least one embodiment, the processing and encoder/decoder elements of system 600 are distributed across multiple ICs and/or discrete components. In various embodiments, the system 600 is communicatively coupled to one or more other systems, or other electronic devices, via, for example, a communications bus or through dedicated input and/or output ports. In various embodiments, the system 600 is configured to implement one or more of the aspects described in this document.

The system 600 includes at least one processor 610 configured to execute instructions loaded therein for implementing, for example, the various aspects described in this document. Processor 610 can include embedded memory, input output interface, and various other circuitries as known in the art. The system 600 includes at least one memory 620 (e.g., a volatile memory device, and/or a non-volatile memory device). System 600 includes a storage device 640, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 640 can include an internal storage device, an attached storage device (including detachable and non-detachable storage devices), and/or a network accessible storage device, as non-limiting examples.

System 600 includes an encoder/decoder module 630 configured, for example, to process data to provide an encoded video or decoded video, and the encoder/decoder module 630 can include its own processor and memory. The encoder/decoder module 630 represents module(s) that can be included in a device to perform the encoding and/or decoding functions. As is known, a device can include one or both of the encoding and decoding modules. Additionally, encoder/decoder module 630 can be implemented as a separate element of system 600 or can be incorporated within processor 610 as a combination of hardware and software as known to those skilled in the art.

Program code to be loaded onto processor 610 or encoder/decoder 630 to perform the various aspects described in this document can be stored in storage device 640 and subsequently loaded onto memory 620 for execution by processor 610. In accordance with various embodiments, one or more of processor 610, memory 620, storage device 640, and encoder/decoder module 630 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 610 and/or the encoder/decoder module 630 is used to store instructions and to provide working memory for processing that is needed during encoding or decoding. In other embodiments, however, a memory external to the processing device (for example, the processing device can be either the processor 610 or the encoder/decoder module 630) is used for one or more of these functions. The external memory can be the memory 620 and/or the storage device 640, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 600 can be provided through various input devices as indicated in block 635. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High-Definition Multimedia Interface (HDMI) input terminal. Other examples, not shown in Figure 6, include composite video.

In various embodiments, the input devices of block 635 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 600 to other electronic devices across USB and/or HDMI connections. It is to be understood that various aspects of input processing, for example, Reed-Solomon error correction, can be implemented, for example, within a separate input processing IC or within processor 610 as necessary. Similarly, aspects of USB or HDMI interface processing can be implemented within separate interface Ics or within processor 610 as necessary. The demodulated, error corrected, and demultiplexed stream is provided to various processing elements, including, for example, processor 610, and encoder/decoder 630 operating in combination with the memory and storage elements to process the datastream as necessary for presentation on an output device.

Various elements of system 600 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 650 that enables communication with other devices via communication channel 660. The communication interface 650 can include, but is not limited to, a transceiver configured to transmit and to receive data over communication channel 660. The communication interface 650 can include, but is not limited to, a modem or network card and the communication channel 660 can be implemented, for example, within a wired and/or a wireless medium.

Data is streamed, or otherwise provided, to the system 600, in various embodiments, using a wireless network such as a Wi-Fi network, for example IEEE 802.11 (IEEE refers to the Institute of Electrical and Electronics Engineers). The Wi-Fi signal of these embodiments is received over the communications channel 660 and the communications interface 650 which are adapted for Wi-Fi communications. The communications channel 660 of these embodiments is typically connected to an access point or router that provides access to external networks including the Internet for allowing streaming applications and other over-the-top communications. Other embodiments provide streamed data to the system 600 using a set-top box that delivers the data over the HDMI connection of the input block 635. Still other embodiments provide streamed data to the system 600 using the RF connection of the input block 635. As indicated above, various embodiments provide data in a non-streaming manner. Additionally, various embodiments use wireless networks other than Wi-Fi, for example a cellular network or a Bluetooth network.

The system 600 can provide an output signal to various output devices, including a display 601, speakers 602, and other peripheral devices 603. The display 601 of various embodiments includes one or more of, for example, a touchscreen display, an organic light-emitting diode (OLED) display, a curved display, and/or a foldable display. The display 601 can be for a television, a tablet, a laptop, a cell phone (mobile phone), or another device. The display 601 can also be integrated with other components (for example, as in a smart phone), or separate (for example, an external monitor for a laptop). The other peripheral devices 603 include, in various examples of embodiments, one or more of a stand-alone digital video disc (or digital versatile disc) (DVR, for both terms), a disk player, a stereo system, and/or a lighting system. Various embodiments use one or more peripheral devices 603 that provide a function based on the output of the system 600. For example, a disk player performs the function of playing the output of the system 600.

In various embodiments, control signals are communicated between the system 600 and the display 601, speakers 602, or other peripheral devices 603 using signaling such as AV.Link, Consumer Electronics Control (CEC), or other communications protocols that enable device-to-device control with or without user intervention.

The output devices can be communicatively coupled to system 600 via dedicated connections through respective interfaces 670, 680, and 690. Alternatively, the output devices can be connected to system 600 using the communications channel 660 via the communications interface 650. The display 601 and speakers 602 can be integrated in a single unit with the other components of system 600 in an electronic device such as, for example, a television. In various embodiments, the display interface 670 includes a display driver, such as, for example, a timing controller (T Con) chip.

The display 601 and speaker 602 can alternatively be separate from one or more of the other components, for example, if the RF portion of input 635 is part of a separate set-top box. In various embodiments in which the display 601 and speakers 602 are external components, the output signal can be provided via dedicated output connections, including, for example, HDMI ports, USB ports, or COMP outputs.

The embodiments can be carried out by computer software implemented by the processor 610 or by hardware, or by a combination of hardware and software. As a non-limiting example, the embodiments can be implemented by one or more integrated circuits. The memory 620 can be of any type appropriate to the technical environment and can be implemented using any appropriate data storage technology, such as optical memory devices, magnetic memory devices, semiconductor-based memory devices, fixed memory, and removable memory, as non-limiting examples. The processor 610 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments can refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches can be based on an extensive testing of all encoding options, including all considered modes or coding parameters values, with a complete evaluation of their coding cost and related distortion of the reconstructed signal after coding and decoding. Faster approaches can also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application can refer to "determining" various pieces of information. Determining the information can include one or more of, for example, estimating the information, calculating the information, predicting the information, or retrieving the information from memory.

Further, this application can refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application can refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:

At least one embodiment comprises adapting attributes for three-dimensional Gaussians according to the scene for subsequent image processing.

At least one embodiment comprises the preceding embodiment, further comprising signaling of the number of coefficients in a bitstream.

At least one embodiment comprises any encoding or decoding operation based on the above operations.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

## Claims

1. A method, comprising:

   determining three-dimensional Gaussian representations of a scene comprising available views, wherein color components comprise spherical harmonics of a first degree corresponding to R,G,B color;
   rendering views using viewpoints of the scene using the determined three-dimensional Gaussian representations;
   determining an error value between the available views and the rendered views;
   retraining pixels having said error value higher than a threshold, using higher spherical harmonics;
   determining final rendered views by repeating said rendering, determining of the error value, and retraining until an end condition is met; and, performing subsequent processing on the final rendered views.

2. An apparatus, comprising:
   a memory and a processor, configured to:

   determine three-dimensional Gaussian representations of a scene comprising available views, wherein color components comprise spherical harmonics of a first degree corresponding to R,G,B color;
   render views using viewpoints of the scene using the determined three-dimensional Gaussian representations;
   determine an error value between the available views and the rendered views;
   retrain pixels having said error value higher than a threshold, using higher spherical harmonics;
   determine final rendered views by repeating said rendering, determining of the error value, and retraining until an end condition is met; and, perform subsequent processing on the final rendered views.

3. The method of Claim 1, or the apparatus of claim 2, wherein a number of coefficients for each three-dimensional Gaussian or group of Gaussians is adaptively computed.

4. The method, or apparatus, of Claim 3, wherein said coefficients change based on Gaussian position.

5. The method, or apparatus, of Claim 3, wherein said coefficients change based on regions of a scene.

**6.** The method of Claim 1, or the apparatus of claim 2, wherein a number of coefficients for all three-dimensional Gaussians is equal.

**7.** The method, or the apparatus, of Claim 6, wherein at least one of the coefficients are zero and not coded.

**8.** The method, or the apparatus, of Claim 6, wherein coefficients are ordered based on increasing frequency in a transform.

**9.** The method, or the apparatus, of Claim 6, wherein all three-dimensional Gaussians in a group share identical coefficients.

**10.** The method, or the apparatus, of Claim 6, wherein a number of coefficients are signaled in a bitstream.

**11.** The method, or the apparatus, of Claim 10, wherein the number of coefficients signaled in the bitstream is representative of an individual three-dimensional Gaussian or a group of Gaussians.

**12.** The method, or the apparatus, of Claim 11, wherein the individual three-dimensional Gaussian or a group of Gaussians is identified by a group identification.

**13.** A device comprising:

an apparatus according to Claim 2; and
at least one of (i) an antenna configured to receive a signal, the signal including a video block, (ii) a band limiter configured to limit the received signal to a band of frequencies that includes the video block, and (iii) a display configured to display an output representative of the video block.

**14.** A non-transitory computer readable medium containing data content generated according to the method of Claim 1, for playback using a processor.

**15.** A non-transitory computer readable storage medium containing program code which, when the program code is executed by a computer, cause the computer to carry out the method of Claim 1, for playback using a processor.

Figure 1

200

201 — Start

211 — Determine 3DGs of a scene

221 — Render views using viewpoints

231 — Determine error values

241 — Retraining some pixels

251 — Determine final rendered views until stop condition

261 — Perform subsequent processing

Figure 2

300

Processor

310

Memory

320

Figure 3

Figure 4

500

230 Entropy Decoding

235 Partitioning

240 Inverse Quantization

250 Inverse Transform

255

270

260 Intra Prediction

275 Motion Compensation

265 In-loop Filters

280 Reference Picture Buffer

285 Post-decoding processing

Figure 5

EP 4 648 427 A1

16

Figure 6

Europäisches Patentamt

European Patent Office

Office européen des brevets

# EUROPEAN SEARCH REPORT

**Application Number**

EP 24 30 5728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHARATH GIRISH ET AL: "EAGLES: Efficient Accelerated 3D Gaussians with Lightweight EncodingS", ARXIV.ORG, CORNELL UNIVERSITY LIBRARY, 201 OLIN LIBRARY CORNELL UNIVERSITY ITHACA, NY 14853, 24 April 2024 (2024-04-24), XP091737389, * pages 2,4-8,13; figure 4 * ----- | 1-15 | INV. H04N21/81 |
| A | BERNHARD KERBL ET AL: "3D Gaussian Splatting for Real-Time Radiance Field Rendering", ARXIV.ORG, CORNELL UNIVERSITY LIBRARY, 201 OLIN LIBRARY CORNELL UNIVERSITY ITHACA, NY 14853, 8 August 2023 (2023-08-08), XP091588895, * the whole document * ----- | 1-15 | |
| | | | **TECHNICAL FIELDS SEARCHED (IPC)** |
| | | | H04N |

The present search report has been drawn up for all claims

| Place of search | Date of completion of the search | Examiner |
|---|---|---|
| Munich | 25 September 2024 | Folea, Octavian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)